# EUROPEAN PATENT SPECIFICATION

(11) **EP 1 618 009 B1**
(45) Date of publication and mention of the grant of the patent: **11.06.2008**
(21) Application number: 03725582.5
(22) Date of filing: 28.04.2003
(51) Int. Cl.: B60C 11/18, B60C 1/00, B29D 30/60

(54) **PNEUMATIC TIRE PROVIDED WITH A MULTI-LAYERED TREAD AND PROCESS FOR ITS MANUFACTURE**
LUFTREIFEN MIT MEHRSCHICHTIGER LAUFFLÄCHE UND VERFAHREN ZUR HERSTELLUNG DERSELBEN
PNEU COMPRENANT UNE BANDE DE ROULEMENT MULTICOUCHE ET PROCEDE DE FABRICATION

(43) Date of publication of application: 25.01.2006
(73) Proprietor: Pirelli Tyre S.p.A., 20126 Milano (IT)
(72) Inventor: LOSI, Piero, c/o Pirelli Pneumatici S.p.A., I-20126 Milano (IT); DE CANCELLIS, Pierluigi, c/o Pirelli Pneumatici S.p.A., I-20126 Milano (IT); LO PRESTI, Gaetano, c/o Pirelli Pneumatici S.p.A., I-20126 Milano (IT); NOTO, Rodolfo, c/o Pirelli Pneumatici S.p.A., I-20126 Milano (IT); LACAGNINA, Claudio, c/o Pirelli Pneumatici S.p.A., I-20126 Milano (IT)
(74) Representative: Bottero, Claudio
(86) International application number: PCT/IT2003/000262
(87) International publication number: WO 2004/096583

(56) References cited:
- EP-A- 0 685 352
- EP-A- 1 095 795
- DE-A- 2 362 627
- GB-A- 2 058 687
- GB-A- 2 150 509
- US-A- 4 478 266

## Description

### Background of the invention

The present invention relates to a pneumatic tire for two-wheeled or four-wheeled vehicles and in particular, but not exclusively, to a pneumatic tire for high performance or for racing vehicles.

Such tire, corresponding to the preamble of claim 1, is e.g. known from DE-A1-2 362 627.

Specifically, the present invention refers to a pneumatic tire comprising a carcass structure having at least one carcass ply, at least one annular reinforcing structure associated to said carcass structure, a tread band made of an elastomeric material in a radially outer position with respect to said carcass structure, a belt structure interposed between said carcass structure and said tread band and a pair of axially opposite sidewalls on said carcass structure, said tread band comprising at least one radially inner layer and a radially outer layer apt to roll on the ground.

### Prior art

In the field of pneumatic tires for vehicles and in order to improve one or more characteristics of road behavior without substantially influencing in a negative way the remaining characteristics, pneumatic tires provided with a tread band having a plurality of radially superposed layers or anyhow consisting of portions made of materials having different mechanical properties are well known.

In the field of pneumatic tires for motorcycles it was for example suggested, by Japanese patent application JP 05-256646 (JP-A-7 108 805) to improve the tire performance along a curve by making a tread band provided with an equatorial portion having a lower hardness and a higher tangδ as compared to those of opposite shoulder portions of the tread band itself.

On the other side, Japanese patent application JP 02-314293 has suggested, in order to prevent a partial wear of the tread band with the exfoliation of elastomeric material layers and the formation of cracks in the material, to realize a tread band provided with two radially superposed layers, each of which is in turn axially divided into two suitably shaped portions made of different materials.' More specifically, the construction suggested by this document foresees that the two portions of each tread band layer have end segments having a reduced thickness at the equatorial plane of the pneumatic tire in such a way that the two portions of the layer may axially fit into one another.

In the field of pneumatic tires of big size for heavy vehicles or road vehicles, it has also been suggested by European patent application EP 0 105 822 to improve the dissipation of the heat generated by hysteresis in the radially inner part of the tread band and to improve the wear and cut resistance of the radially outer part thereof by making a multi-layered tread band provided with inner layers having an improved resistance to heat dissipation and with outer layers having an improved tear resistance.

Finally, in order to achieve improved characteristics of the pneumatic tires in terms of steering response at high speeds of radial pneumatic tires, the prior art has proposed, such as for example disclosed in Canadian Patent CA 1 228 282, to use a multi-layered tread band comprising a radially inner layer having a modulus of elasticity E' at 25°C comprised between 100 and 250 Kg/cm², and a radially outer layer having a modulus of elasticity E' at 25°C comprised between 70 and 150 Kg/cm² and a tangδ value not lower than 0.25, wherein the ratio between the modulus of elasticity of the radially inner layer and that of the radially outer layer (as measured at 25°C) is not lower than 1.15.

### Summary of the invention

The object of the present invention is that of providing a pneumatic tire provided with a multi-layered tread band and having improved handling characteristics and, more particularly, improved roadholding characteristics along a curve of the two-wheeled or four-wheeled vehicle on which the pneumatic tire is mounted.

According to a first aspect of the invention, this object is achieved by a pneumatic tire as defined in the attached claim 1.

In particular, the Applicant has found that in order to achieve the desired improved handling characteristics and, more particularly, the roadholding characteristics along a curve it is not sufficient to design the mechanical properties of the elastomeric materials used to make the multi-layered tread band, but it is also necessary to shape in a suitable way at least one of the radially inner layers so as to achieve a supporting structure capable to develop an adequate counteraction against the transversal stresses which the pneumatic tire is subjected to along a curve.

More particularly, the Applicant has found that in order to achieve the above mentioned object it is necessary that the tread band is provided with at least one radially inner layer and a radially outer layer apt to roll on the ground and that :
i) said at least one radially inner layer has a modulus of elasticity (E') under compression higher than the modulus of elasticity (E') under compression of the radially outer layer;
ii) said at least one radially inner layer of the tread band comprises a plurality of circumferential abutment elements radially extending in said radially outer layer and axially distributed along the transversal development of the tread band.

The Applicant, while not wishing to be bound by any interpretative theory, observes that the circumferential abutment elements of the radially inner layer of the tread band, more rigid *per se* than the radially outer layer in which they radially extend, constitute as many "beam" elements circumferentially embedded in the thickness of the tread band and adapted to effectively counter the deforming action of the transversal stresses which the pneumatic tire is subjected to along a curve.

The "embedded beam" structure of the multi-layered tread band of the pneumatic tire of the present invention also allows to achieve the additional important technical effect of allowing a gradual change from initial performances characterized by high grip and good transversal rigidity to' performances characterized by a gradually decreasing grip accompanied by an ever increasing transversal rigidity while the pneumatic tire wears down.

This latter technical effect is particularly advantageous when the pneumatic tire is mounted on the wheels of a high-performance motorvehicle or motorcycle, since the driver is enabled to perceive the gradual change from the initial performances of the' brand new pneumatic tire to those offered by the used pneumatic tire as it wears down.

Advantageously, moreover, the pneumatic tire of the invention allows to,balance at will grip and durability of the tread band by using known rubber mixtures without the need to specially develop new rubber mixtures thereby substantially reducing manufacturing times and costs.

In a preferred embodiment of the invention, the ratio between the modulus of elasticity E' under compression at 70°C of the radially inner layer and the modulus of elasticity E' under compression at 70°C of the radially outer layer of the tread band is between about 1.1 and about 3 and, still more preferably, between about 1.1 and 2.

In such a way it was advantageously possible to obtain an optimal compromise between the performances in terms of handling and comfort of the pneumatic tire and the resistance to the transversal stresses which the tire is subjected to mainly during running along a curve or in mixed courses.

Preferably and in order to achieve the aforementioned ratios, said at least one radially inner layer of the tread band has a modulus of elasticity (E') under compression at 70°C of between about 2 and about 14 MPa, whereas the radially outer portion has a modulus of elasticity (E') under compression at 70°C of between about 2 and'about 10 MPa.

In the following description and in the subsequent claims, the values of the modulus of elasticity E' under compression are intended to be measured by means of conventional apparatuses by submitting a cylindrical test piece of vulcanized elastomeric material having a length of 25 mm and a diameter of 14 mm, subjected to compression preloading up to a longitudinal deformation of 25% of its original height and kept at a temperature of 70°C., to a dynamic sinusoidal deformation of a maximum width of ± 3.50% of the height under preloading, with a frequency of 100 cycles per second (100 Hz).

More preferably, the aforementioned at least one radially inner layer of the tread band has a modulus of elasticity (E') under compression at 70°C comprised between about 2.2 and about 9 MPa; whereas the radially outer layer has a modulus of elasticity (E') under compression at 70°C comprised between about 2 and about 8.5 MPa.

Still more preferably, the aforementioned at least one radially inner layer of the tread band has a modulus of elasticity (E') under compression at 70°C comprised between about 2.2 and about 6 MPa in the case of pneumatic tires for racing and between about 5.5 and about 9 in the case of pneumatic tires for high-performance motorvehicles, whereas the radially outer layer has a modulus of elasticity (E') under compression at 70°C of between about 2 and about 5.5 MPa in the case of pneumatic tires for racing and between about 5 and about 8.2 in the case of pneumatic tire for high-performance stock motorvehicles.

By observing the aforementioned values of the modulus of elasticity (E') under compression at 70°C of the layers of the tread band, it has been noted that it is also possible to optimize according to the type of pneumatic tire the gradual change from initial performances characterized by high grip and good transversal rigidity to performances characterized by a gradually decreasing grip accompanied by an ever greater transversal rigidity as the pneumatic tire wears down.

In this way it was advantageously possible to achieve an optimal compromise between the performances in terms of wear of the tread band of the pneumatic tire and in terms of resistance to the transversal stresses which the tire is subjected to mainly during running along a curve or in mixed courses.

Preferably, the ratio between the thickness of the aforementioned at least, one radially inner layer and the overall thickness of the tread band is comprised between about 0.5 and about 1.

In a particularly preferred embodiment of the invention, the ratio between the thickness of the aforementioned at least one radially inner layer and the overall thickness of the tread band is comprised between about 0.5 and about 0.95 and, still more preferably, is comprised between about 0.8 and about 0.95.

For the purposes of the invention, the radially inner and outer layers of the tread band may be obtained by shaping and vulcanizing suitable elastomeric materials the composition of which may be easily determined by a man skilled in the art so as to achieve the aforementioned desired values of the modulus of elasticity (E') under compression at 70°C.

It should be specified herein that in the present description and in the subsequent claims, the term "elastomeric material" is used to indicate a composition comprising at least one elastomeric polymer and at least one reinforcing filler. Preferably, such a composition also comprises additives such as, for example, a cross-linking agent and/or a plasticizer. Thanks to the presence of the cross-linking agent, such a material may be cross-linked by heating, so as to form the end product.

In accordance with the invention, the circumferential abutment elements formed in the aforementioned at least one radially inner layer of the tread band and radially extending in the radially outer layer may be axially distributed along the transversal development of the tread band in a variety of ways.

In a first preferred embodiment of the invention, the circumferential abutment elements may be arranged side-by-side along the transversal development of the tread band.

In a second preferred embodiment of the invention, the circumferential abutment elements may be spaced apart along the transversal development of the tread band.

In both embodiments, the circumferential abutment elements may also be axially distributed with a substantially constant pitch or, alternatively, with a variable pitch along the transversal development of the tread band.

Within the framework of the present description and in the subsequent claims, the term "pitch" of the circumferential abutment elements, is used to indicate the distance measured within a cross-section and along the axial direction between the middle points of two consecutive abutment elements, which may be adjacent or not. Within the framework of the present definition; the middle point of each circumferential abutment element is the mid point of the line joining the opposite radially inner axial ends thereof.

Within the framework of the present description and in the subsequent claims, the term "width" of each circumferential abutment element, is used to indicate the projection on a line parallel to the axis of rotation of the pneumatic tire of the segment joining within a cross-section the radially inner ends of said abutment element.

Within the framework of the present description and in the subsequent claims, finally, the term "height" of each circumferential abutment element, is used to indicate the projection on a plane parallel to the equatorial plane of the pneumatic tire of the segment of the perpendicular line spanning within a cross-section between the radially outermost point of the abutment element and the segment joining the aforementioned radially inner ends of the abutment element itself.

Thanks to these different geometric configurations, it is advantageously possible to adjust the axial distribution of the circumferential abutment elements so as to achieve the desired characteristics of resistance to the transversal stresses as a function of the size of the pneumatic tire and/or of the type of use and/or of the characteristics of the elastomeric materials used to manufacture the radially superposed layers of the tread band.

According to the invention, the circumferential abutment elements formed in the aforementioned at least one radially inner layer of the tread band and radially extending in the radially outer layer may also have different radial extensions and/or different geometric shapes.

In this way, it has been noted that it is advantageously possible to achieve the desired characteristics of resistance to the transversal stresses as a function of the size of the pneumatic tire and/or of the type of use and/or of the characteristics of the elastomeric materials used to manufacture the radially superposed layers of the tread band.

As mentioned above, the pneumatic tire of the invention may be used to equip both two-wheeled and four-wheeled vehicles.

Within the use on motorvehicles, the pneumatic tire of the invention comprises a tread band provided with a tread pattern. Also, the pneumatic tire has a preferred use on high-performance vehicles.

Within the framework of the invention and irrespective of the specific shape of the circumferential abutment elements, the ratio between the height and width the circumferential abutment elements is comprised between about 1:20 and about 4:1 and, preferably, between about 1:5 and about 2:1.

Within they framework of the use on motorvehicles and in accordance with an embodiment which does not form part of the invention, the pneumatic tire is of the so-called "slick" type, i.e. it comprises a tread band substantially devoid of a tread pattern. In this embodiment, the pneumatic tire has a preferred use on racing vehicles.

In this embodiment and irrespective of the specific shape of the circumferential abutment elements, the height of these elements is preferably comprised between about 1 and about 4 nun.

In this case, moreover, the ratio between the height and the width of the abutment elements is preferably comprised between about 1:50 and about 4:1 and, still more preferably, between about 1:40 and about 1:1.

In a preferred embodiment of the invention, the ratio between the height and the width of said abutment elements is substantially constant along the whole' transversal development of the tread band.

In this embodiment and if the circumferential abutment elements are adjacent to each other, the constancy of such a height./width ratio also implies that the circumferential abutment elements are also axially distributed with a substantially constant pitch or, in other words, with a substantially constant axial distribution along the transversal development of the tread band.

In a preferred alternative embodiment of the invention, the ratio between the height and the width of said abutment elements in at least a first portion of the tread band is different from the ratio between the height and the width of the abutment elements in at least a second portion of the tread band.

In this embodiment and if the circumferential abutment elements are adjacent to each other, the difference of such a height/width ratio in different portions of the tread band also implies that the circumferential abutment elements are axially distributed with a variable pitch or, in other words, with a variable axial distribution along the transversal development of the tread band.

Preferably, the circumferential abutment elements may have a substantially polygonal cross section having a profile formed by substantially rectilinear segments, or a rounded cross-section having a profile formed by substantially curvilinear segments.

In a particularly preferred embodiment of the invention, the circumferential abutment elements have a substantially triangular cross section which is particularly effective in exerting the desired counteraction against the transversal stresses which the pneumatic tire is subjected to along a curve.

In accordance with a further aspect of the invention,- a process is provided for manufacturing a pneumatic tire as defined in attached claim 15.

Such a process comprises, in particular, the steps of:
a) manufacturing a carcass structure associated to an annular, reinforcing structure;
b) making a belt structure;
c) arranging at least one first layer of a tread band and substantially consisting of a first elastomeric material in a radially outer position with respect to said belt structure, said first layer comprising a plurality of circumferential abutment elements radially outwardly extending and axially distributed along, the transversal development of the tread band;
d) arranging on said at least one first layer, at least one second layer of the tread band substantially consisting of a second elastomeric material having after vulcanization a modulus of elasticity under compression lower than the modulus of elasticity under compression of the first elastomeric material of' said at least one first layer of the tread band.

### Brief description of the drawings

Additional features and advantages of the invention will be better apparent from the following description of some preferred embodiments of pneumatic tires and of processes for their manufacture according to the invention, which description is made by way of non limiting indication, with reference to the attached drawings, wherein:
- Figure 1 shows a cross-section view of an embodiment of a pneumatic tire according to the present invention;
- Figure 1A shows an enlarged scale cross-section view of some details of the pneumatic tire of Figure 1;
- Figures 2-5 shows as many enlarged scale cross-section views of some details of alternative embodiments of a pneumatic tire according to the present, invention;
- Figure 6 shows a cross-section view of a further - embodiment of a pneumatic tire according to the present invention;
- Figure 7 shows a cross-section view of an embodiment of a pneumatic tire which does not form part of the invention;
- Figure 8 shows a schematic plan view of a robotized station for making the tread band of the pneumatic tire according to the invention;
- Figure 8A shows a schematic plan view of a robotized station for making the tread band of the pneumatic tire according to the invention on a substantially cylindrical auxiliary drum;
- Figure 9 shows a schematic perspective view of a robotized station for making , the tread band of the pneumatic tire according to the invention on a substantially rigid toroidal support.

### Detailed description of the preferred embodiments

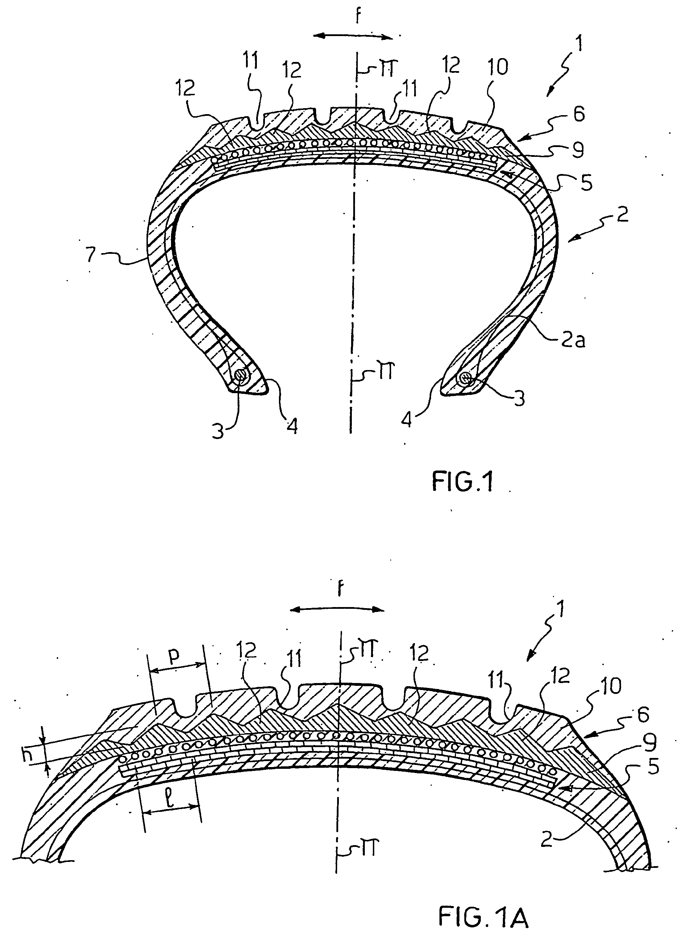

With reference to figures 1-5, a pneumatic tire made in accordance with a first preferred embodiment of the' invention, which may be used to equip both high-perfoxmance vehicles and racing vehicles, is generally indicated at 1.

The pneumatic tire 1 comprises a carcass structure 2 provided with at least one carcass, ply 2a the opposite side edges of which are externally folded up around respective annular reinforcing structures 3, usually known as "bead cores", each enclosed in a bead 4 defined along an inner circumferential edge of the pneumatic tire 1 and at which the pneumatic tire itself engages on a rim (not shown) forming part of the wheel of a vehicle.

The pneumatic tire 1 also comprises a tread band 6 made of an elastomeric material in a radially outer position with respect to the carcass structure 2, a belt structure 5 interposed between the carcass structure 2 and the tread band 6.and a pair of sidewalls 7, 8 in axially opposite positions on the carcass structure 2.

Preferably, the belt structure 5 includes one or more belt layers made for example with a fabric of metal cords or wires embedded in a rubber sheet, arranged parallel to each other in each layer and crossed with respect to those of the adjacent layer and with one or more so-called 0° cords spirally and coaxially wound on the pneumatic tire 1 in a radially outer position with respect to the crossed cord fabrics.

In accordance with the embodiment illustrated in figure 1, the tread band 6 circumferentially applied around the belt structure 5 comprises a radially inner layer 9 and a radially outer layer 10, apt to roll on the ground and usually provided with a tread pattern comprising a plurality of grooves 11 which define a plurality of rubber ribs and rubber blocks.

In accordance with a first feature of the invention, the radially inner layer 9 of the tread band 6 of the pneumatic tire 1 has a modulus of elasticity (E') under compression greater than the modulus of elasticity (E') under compression of the radially outer layer 10.

In this way, the two layers 9 and 10 of the tread band 6 advantageously carry out the function of supporting layer having a.high transversal rigidity and, respectively, the function of high-grip ground-contacting layer.

In a particularly preferred embodiment and if the pneumatic tire 1 is intended for racing vehicles, the radially inner layer 9 has a modulus of elasticity (E') under compression comprised between about 3 and about 6 MPa, whereas the radially outer layer 10 has a modulus of elasticity (E') under compression- comprised between about 2 and about 5 MPa.

In a particularly preferred embodiment and if the pneumatic tire 1 is intended for high-performance vehicles, the radially inner layer 9 has a modulus of elasticity (E')_ under compression comprised between about 6 and about 9 MPa, whereas the radially outer layer 10 has a modulus of elasticity (E') under compression comprised between about 5 and about 8 MPa.

In both cases, the ratio between the modulus of elasticity (E') under compression at 70°C of the elastomeric material of the radially inner layer 9 and the modulus of elasticity (E') under compression at 70°C of the elastomeric-material of the radially outer layer 10 is preferably comprised between about 1.1 and about 3 and, still more preferably, between about 1.1 and about 2.

In the preferred embodiment illustrated, the ratio between the thickness of the radially inner layer 9 and the overall thickness of the tread band 6 is comprised between about 0.5 and about 1.

Preferably, the ratio between the thickness of the radially inner layer 9 and the overall-thickness of the tread band 6 is less than about 0.95 and, more preferably, is comprised between about 0.8 and about 0.95 in both types of use of the pneumatic tire 1 (high-performance vehicles or racing vehicles).

In accordance with a second feature of the invention, the radially inner layer 9- of the tread band 6 comprises a plurality of circumferential abutment elements 12 radially extending in the radially outer layer 10, in which they are completely embedded and axially distributed along the transversal development of the tread band 6.

Advantageously, each circumferential abutment element 12 essentially consists of a portion of the radially inner layer of the tread band having a structure and mechanical resistance capable to develop a substantial' resistance against the transversal stresses acting on the tread band of the pneumatic tire and tending to elastically deform the tread band itself.

In other words, the circumferential abutment elements 12 substantially constitute as many "beam" elements capable of effectively countering the transversal stresses acting on the pneumatic tire 1 according to the double arrow f of Figure 1 when the vehicle on which the pneumatic tire 1 is mounted runs along a curve.

In the preferred embodiment illustrated in Figure 1, the abutment elements 12 are arranged side-by-side and are adjacent to each other along the transversal development of the tread band 6.

The abutment elements 12 are also axially distributed with a substantially constant pitch "p" (indicated for the sake of clarity in Figure 1A with reference to two adjacent abutment elements 12) along the transversal development of the tread band 12, so as to have a pneumatic tire 1 which reacts substantially symmetrically with respect to its own equatorial plane π to the aforementioned transversal stresses which it undergoes when running along a curve.

The ratio between the height "h" and the width "1" of the abutment elements 12 (indicated for the sake of clarity in Figure 1A with reference to one of the abutment elements 12) is comprised between about 1:20 and about 4:1 and, preferably, between about 1:5 and about 2:1.

In some preferred embodiments said ratio h/l is substantially constant along the whole transversal development of the tread band 6.

In this preferred embodiment, the abutment elements 12 are axially distributed according to a substantially constant pitch along the transversal development of the tread band 6.

Preferably, moreover, the abutment elements 12 have a substantially triangular cross section which is advantageously capable to counteract in an optimal way the aforementioned transversal stresses which the pneumatic tire 1 undergoes when running along a curve.

Thanks to the construction described above, the pneumatic tire 1 is capable not only to achieve an improved handling and an optimal' grip along a curve, but also to achieve a gradual change from initial performances characterized by high grip and good transversal rigidity to performances characterized by a gradually decreasing grip accompanied by an ever greater transversal rigidity as the pneumatic tire 1 wears down along with the wear of the high-grip radially outer layer 10 and as the radially inner layer 9 having a high transversal rigidity comes closer to the rolling surface.

Although the pneumatic tire 1 of this preferred embodiment has been illustrated with just two layers, in the tread band, this does not exclude that the latter could comprise additional layers in order to satisfy specific and contingent application requirements.

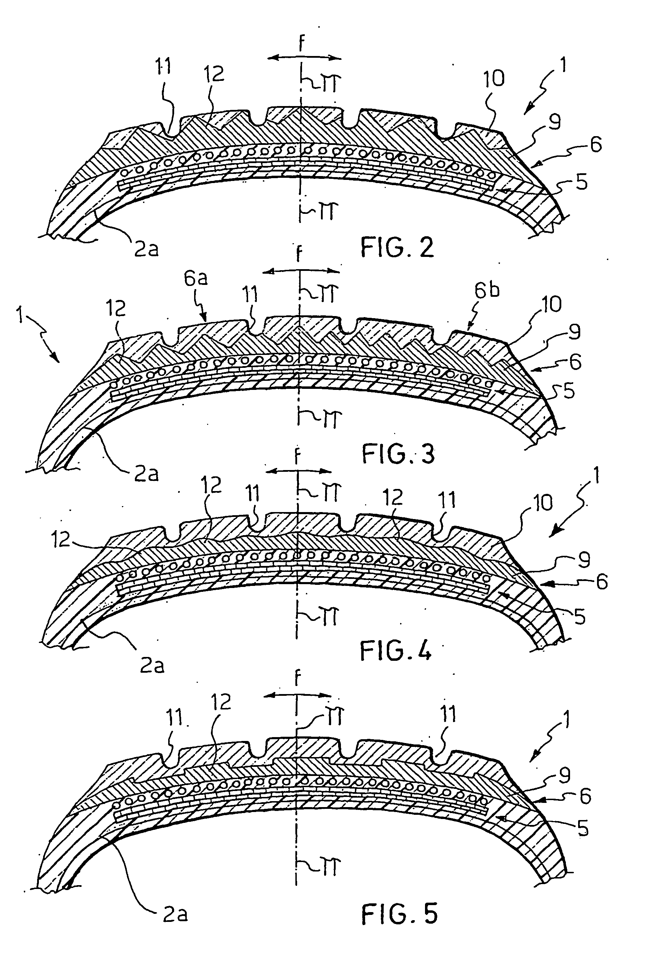

Figures 2-6 illustrate further preferred embodiments of the pneumatic tire 1 of the invention.

In the following description and in such figures, the elements of the pneumatic tire 1 which are structurally'or functionally equivalent to those previously illustrated with reference to the embodiment shown in Figures 1 and 1A will be indicated with the same reference numerals and will not be described any further.

In, the embodiment illustrated in Figure 2, the ratio between the thickness of the radially inner layer 9 and the overall thickness of the tread band 6 is substantially equal to 1 in both types of use of the pneumatic tire 1. (high-performance vehicles or racing vehicles).

In this embodiment and as may be appreciated in such a figure, the substantially triangular circumferential abutment elements 12 have their apex portions immediately below the rolling surface of the tread band 6 so as to privilege the characteristics of transversal rigidity with respect to the grip characteristics also when the pneumatic tire 1 is new.

In the embodiment illustrated in Figure 3, the circumferential abutment elements 12, still having a substantially triangular cross section, are axially distributed with a variable pitch along the transversal development of the tread band 6.

Thus, in a first portion 6a of the tread band 6 having a transversal development substantially equal to one half of the overall transversal development of the tread band 6 of the pneumatic tire 1, the abutment elements 12 are axially distributed with a pitch greater than the pitch of the abutment elements 12 in a second portion 6b of the tread band 6 having a transversal development substantially equal to the second half of the overall transversal development of the tread band 6.

Preferably, this different pitch of the abutment elements 12 in the two portions 6a and 6b of the tread band is obtained by varying the ratio between the height and the width of the abutment elements 12 for example passing from about 1:5 to about 1:2.

In this embodiment, the pneumatic tire 1 reacts in a substantially asymmetric manner with respect to its equatorial plane π to the transversal stresses which the tire is subjected to when running along a curve.

Clearly, the number and the extent of the transversal development of the portions of tread, band 6 having a different pitch of the abutment elements 12 may be different from those exemplified merely for illustrating and not limiting purposes in Figure 3 and they may be easily determined by a man skilled in the art according to specific application requirements of the pneumatic tire 1.

In the embodiment illustrated in Figure 4, the circumferential abutment elements 12 are axially distributed with a substantially constant pitch along the transversal development of the tread band 6 and have a substantially curvilinear profile.

In the embodiment illustrated in Figure 5, the circumferential abutment elements 12 are spaced apart along the transversal development of the tread band and are axially distributed with a substantially constant pitch along the transversal development of the tread band 6.

Preferably, the circumferential abutment elements 12 have a. substantially rectangular cross section.

Preferably; the ratio between the height and the width of the abutment elements 12 is comprised between about 1:5 and about 1:2, said ratio being preferably substantially constant along the whole transversal development of the tread band 6.

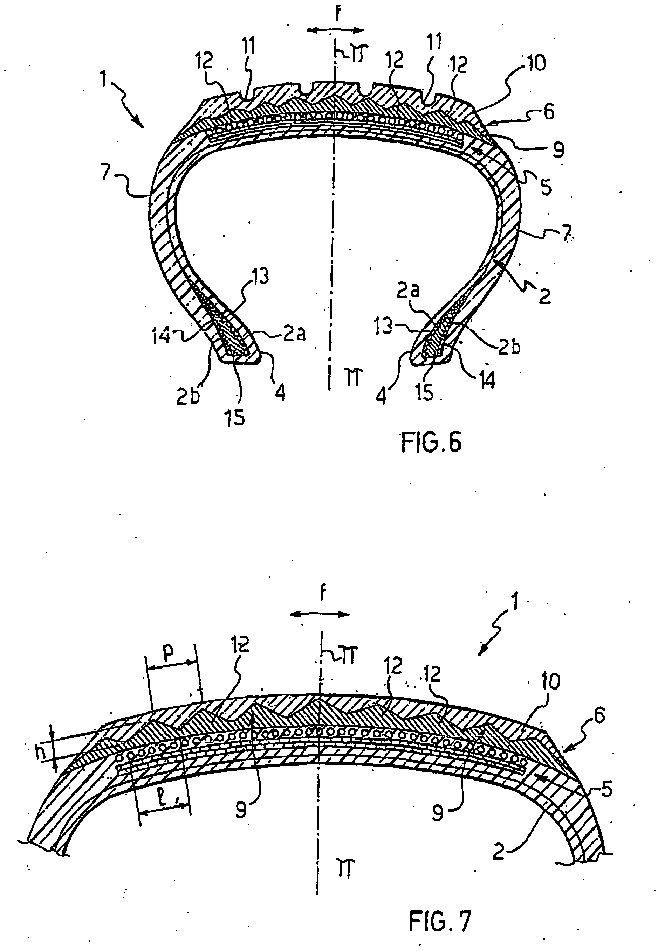

In the embodiment illustrated in Figure 6, the pneumatic tire 1 comprises a carcass structure 2 and annular reinforcing structures 3 having a slightly different construction from that of the pneumatic tire 1 illustrated in Figure 1 due to the different manufacturing process followed, which in this case provides for the realization in a way known *per se* of the carcass structure 2 directly on a substantially toroidal and substantially rigid support as illustrated in document EP 0 928 680 in the name of the present Applicant.

In this embodiment, the carcass structure 2 essentially comprises at least one radially inner carcass ply 2a, and a pair of annular reinforcing structures 3 arranged at respective end edges of the carcass ply 2a. Each annular reinforcing structure 3 comprises at least one annular insert, a first and a second annular inserts 13, 14 in the embodiment illustrated in Figure 6, each comprising at least one metal wire wound according to a plurality of coils axially arranged side-by-side and radially superposed, and a filling body 15 made of an elastomeric material for example axially interposed between the first and the second annular inserts 13, 14.

Figure 7 illustrates a racing pneumatic tire made according to an embodiment which does not form part of the invention. More precisely, said pneumatic tire is of the so-called "slick" type, i.e. it comprises a tread band 6 substantially devoid of a tread pattern. In such an embodiment the thickness of the tread band 6 is reduced to a few millimeters, for example from about 2 to about 5 mm. Consequently, the height of each abutment element 12 made according to one of the shapes previously illustrated is comprised between about 1 and about 4 mm. The ratio between height and width of each circumferential element is preferably comprised between about 1:50 and about 2:1.

It should be observed that in this embodiment the previously illustrated effect of a substantially "beam-like" resistance exerted by the abutment elements 12 is distinctly perceived by the driver who is driving a vehicle having a decreasing grip and an ever increasing transversal rigidity during a race.

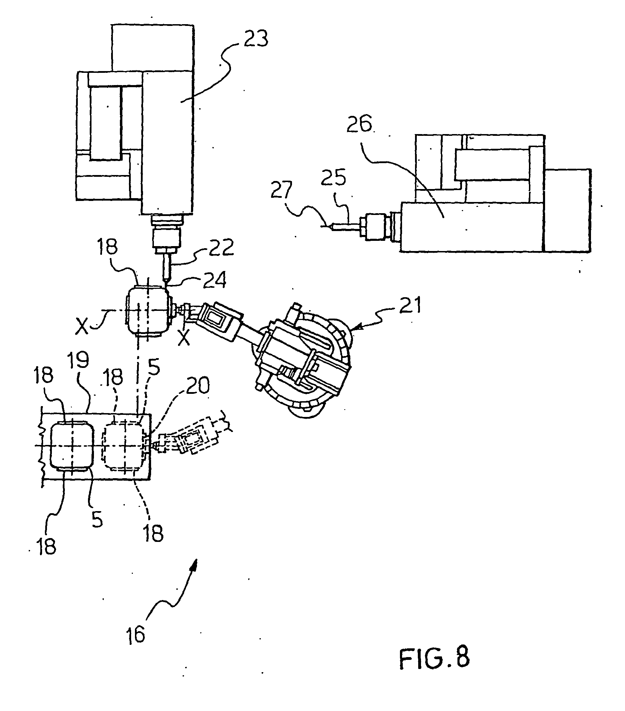

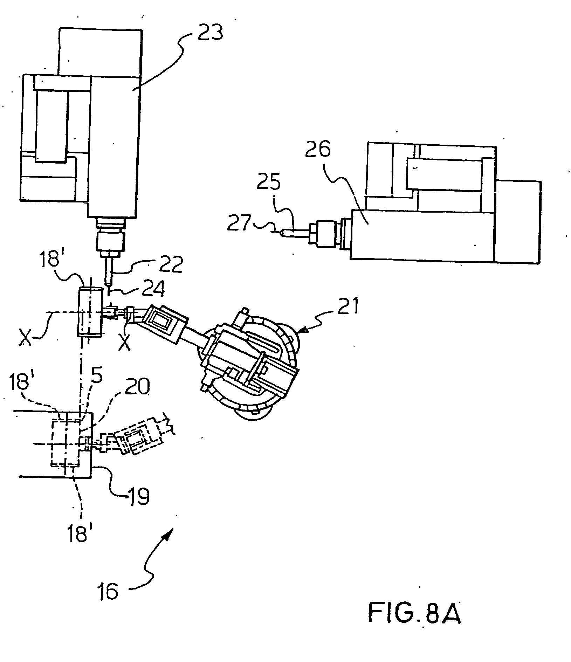

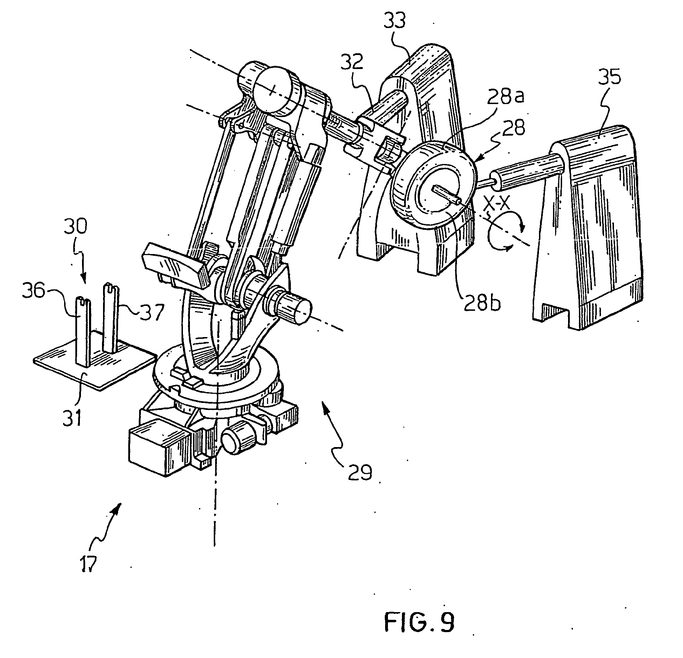

With reference to Figures 8, 8A and 9 respective work stations, generally indicated at 16 in figures 8 and 8A and 17 in figure 9, intended to manufacture the multi-layered tread band 6 of the pneumatic tire 1 within the framework of preferred embodiments of the manufacturing process according to the invention, shall now be described.

In the embodiment illustrated in Figure 8, a robotized work station intended to manufacture the tread band 6 of' the pneumatic tire 1 illustrated in figure 1 is generally indicated at 16.

The work station 16 is associated to a conventional manufacturing plant for the production of pneumatic tires, or for carrying out part of the working operations'foreseen in the production cycle of the pneumatic tires themselves, plant otherwise not illustrated being known *per se.*

In such a plant, apparatuses known *per se* and not illustrated are also present for manufacturing the carcass structure 2 and the annular reinforcing structure. 3 associated thereto on a drum 18, as well as for subsequently forming the belt structure 5 in a radially outer position with respect to the carcass structure 2.

The work station 16 comprises a robotized arm known *per se,* generally indicated at 21 and preferably of the anthropomorphic type with seven axes, intended to pick up each drum 18 supporting the carcass structure 2, the annular reinforcing structure 3 and the belt structure 5 from a pick up position 20, defined at the end of a conveyor belt 19 or other suitable transporting means, to a delivery position of the radially inner layer 9 and of the radially outer layer 10 of the tread band 6.

More specifically, the delivery position of the radially inner layer 9 of the tread band 6 is defined at a first delivery member 22 of an extruder 23, adapted to provide at least one first continuous elongated element consisting of an elongated element 24 made of a suitable elastomeric material having a suitable size in cross-section, whereas the delivery position of the radially outer layer 10 of the tread band 6 is defined at a second delivery member 25 of an extruder 26, adapted to provide at least one second continuous elongated element consisting of an elongated element 27 also consisting of a suitable elastomeric material having a suitable size in cross section.

With reference to the work station 16 described above and to Figure 8, a first preferred embodiment of the process for manufacturing a pneumatic tire of this invention shall now be described.

In a series of preliminary steps carried out upstream of the work station 16, the carcass structure 2, the annular reinforcing structure 3 associated thereto and the belt structure 5 are manufactured and shaped on the drum 18 which assumes and then determines a substantially toroidal shape of the pneumatic tire under construction. Said drum 18 is then transported by the conveyor belt 19 to the pick up position 20.

In a subsequent step, the robotized arm 21 positions the drum 18 at the first delivery position defined at the' first delivery member 22 of the elongated element 24 consisting of the first elastomeric material having after vulcanization a predetermined modulus of elasticity E' under compression and intended to form the radially inner layer 9 of the tread band 6.

At such a delivery position, the robotized arm 21 rotates the drum 18 about its rotation axis X-X and carries out a relative displacement between the delivery member 22 and the drum 18 by also imparting to the latter a translational movement along a direction substantially parallel to the aforementioned rotation axis X-X.

Concurrently with the rotation and translation movement of the drum 18 the first delivery member 22 delivers the elongated element 24 in a radially outer position with respect to the belt layer 5 so as to form the first layer 9 of the tread band 6.

Preferably, the delivery of the elongated element 24 is carried out by forming a plurality of coils axially arranged side-by-side and/or radially superposed so as to define the circumferential abutment elements 12.

In a subsequent step, the robotized arm 21 positions the drum 18 at the second delivery position defined at the second delivery member 25 of the elongated element 27 consisting of the second elastomeric material intended to form the radially outer layer 10 of the tread band 6 and having after vulcanization a modulus of elasticity E' under compression lower than that of the first elastomeric material previously deposited to form the radially inner layer 9.

Also in this second delivery position, the robotized arm 21' rotates the auxiliary drum 18 about its rotation axis X-X and carries out a relative displacement between the delivery member 25 and the auxiliary drum 18 also imparting to the latter a translational movement along a direction substantially parallel to the aforementioned rotation axis X-X.

Concurrently with the rotation and translation movement of the auxiliary drum 18, the second delivery member 25 delivers the elongated element 27 on the radially inner layer 9 of the tread band 6 so as to form the radially outer layer 10 of the tread band 6.

Also in this case, the delivery of the elongated element 27 is carried out by forming a plurality of coils axially arranged side-by-side and/or radially superposed.

At the end of this second deposition step, the tread band 6 of' the green pneumatic tire being manufactured may be deemed to be complete for which reason the drum 18 is transported in an way known *per se* and not shown in the subsequent work stations of the plant.

In a variant of the previous embodiment of the process according to the invention, illustrated with reference to Figure 8A, a substantially cylindrical auxiliary drum 18' is used on which said belt structure 5 is assembled.. Said substantially cylindrical auxiliary drum 18' is moved substantially in the same way as the drum 18 previously illustrated.

More precisely, the auxiliary drum 18' is positioned at the first delivery member 22 of the first elastomeric material; subsequently, an elongated element 24 of said first elastomeric material is delivered by the delivery member 22 onto the belt structure 5, preferably carrying out a relative displacement between the first delivery member 22 and the auxiliary drum 18' so as to form the first layer 9 of the tread band 6 comprising the aforementioned plurality of circumferential abutment elements 12.

Subsequently, the auxiliary drum 18' is positioned at the second delivery member 25 of the second elastomeric material, and an elongated element 27 delivered by the member 25 is deposited on the first layer 9 of the tread band 6, preferably carrying out a relative displacement between the second delivery member 25 and the auxiliary drum 18' so as to form the second layer 10 of the tread band 6.

Also in this embodiment, the steps of delivering the aforementioned elongated elements of elastomeric material are preferably carried out by rotating the auxiliary drum 18' about its rotation axis.

Similarly, the aforementioned .delivering steps are carried out by forming a plurality of coils axially arranged side-by-side and/or radially superposed so as to define the first and second layers 9, 10 of the tread band 6.

Preferably, finally, the relative displacement between the delivery members 22 and 25 and the auxiliary drum 18' is carried out by imparting to the auxiliary drum 18' a translational movement in a direction substantially parallel to its rotation axis.

At the end of the deposition step of the tread band 6, the belt structure-tread band assembly is associated to the remaining parts of the pneumatic tire being manufactured waiting on a different shaping drum. The subsequent shaping of the pneumatic tire finally allows to obtain the green pneumatic tire to be vulcanized.

These preferred embodiments of the process according to the invention have, in particular, an advantageous and effective application when it is desired to exploit conventional production lines, making use indeed of at least one building drum on which the semifinished products which shall constitute the pneumatic tire are at least partially formed, said drum being integrated with a final robotized station for manufacturing the multi-layered tread band described above.

Advantageously, moreover, these preferred embodiments of the process of the invention allow to manufacture directly at the racing track pneumatic tires having the characteristics of grip/durability desired by the technicians according to the track conditions (temperature, type of road surface, etc.) thanks to the transportability of the production system useable in the manufacture of the pneumatic tires according to the invention.

In the embodiment illustrated in Figure 9, a work station intended to manufacture the tread band 6 of the pneumatic tire 1 illustrated in figure 6 is generally indicated at 17.

The work station 17 is in particular associated to a highly automated plant for manufacturing pneumatic tires, or for carrying out part of the working operations foreseen in the production cycle of the pneumatic tires themselves, plant otherwise not illustrated being known *per se.*

Within the framework of these working operations it is advantageously foreseen to manufacture the different parts of the pneumatic tire 1 directly on a substantially toroidal and sub'stantially rigid support 28 having an outer surface 28a, 28b substantially shaped according to the inner configuration of the pneumatic tire itself.

Within such a plant, robotized stations not illustrated herein are also present for manufacturing on the toroidal support 28 the carcass structure 2 associated to the annular reinforcing structure 3 and for the subsequent formation of the belt structure 5 in a radially outer position with respect to the carcass structure 2.

The work station 17 comprises a robotized arm known *per se,* generally indicated at 29 and preferably of the anthropomorphic type with seven axes, intended to pick up' each toroidal support 28 carrying the carcass structure 2, the annular reinforcing structure 3 and the belt structure 5 from a pick up position 30, defined at the end of two supporting arms 36, 37 of a trestle 31 or other suitable support means, to a delivery position of the radially inner layer 9 and of the radially outer layer 10 of the tread band 6.

More specifically, the delivery position of the radially inner layer 9 of the tread band 6 is defined at a first delivery member 32 of an extruder 33, adapted to provide at least one first continuous elongated element consisting of an elongated element (not visible in figure 9) made of a suitable elastomeric material having a suitable size in cross section, whereas the delivery position of the radially outer layer 10 of the tread band 6 is defined at a second delivery member 34 of an extruder 36, adapted to provide at least a second continuous elongated element consisting of an elongated element (also not visible in figure 9) consisting of a suitable second elastomeric material having a suitable size in cross section.

Additional structural and functional details of the robotized arm 29 are for example described in International patent application WO 00/35666 in the name of the present Applicant, the description of which is herein incorporated by reference.

With reference to the work station 17 described above and to Figure 9, a further preferred embodiment of the process for manufacturing a pneumatic tire of this invention shall now be described.

In a series of preliminary steps carried out upstream of the work station 17 in a series of robotized stations, the carcass structure 2, the annular reinforcing structure 3 associated thereto and the belt structure 5 are manufactured on the toroidal support 28 which is then transported to the pick up position 30.

In a subsequent step, the robotized arm 29 positions the toroidal support 28 at the first delivery position defined at the first delivery member 32 of the elongated member consisting of the first elastomeric material having after vulcanization a predetermined modulus of elasticity E' under compression and intended to form the radially inner layer 9 of the tread band 6.

In such a delivery position, the robotized arm 29 rotates the toroidal support 28 about its rotation axis X-X and carries out a relative displacement between the delivery member'32 and the toroidal support 28 also imparting to the latter a translational movement along a direction substantially parallel to the aforementioned rotation axis X-X.

Simultaneously with the rotation and translation movement of the toroidal support 28 the' first delivery member 32 delivers the elongated element in a radially outer position with respect to the belt layer 5 so as to form the first layer 9 of the tread band 6.

Preferably, the delivery of the elongated element is carried out by forming a plurality of coils, axially arranged side-by-side and/or radially superposed so as to define the circumferential abutment elements 12.

In a subsequent step, the robotized arm 29 positions the toroidal support 28 at the second delivery position defined at the second delivery member 34 of the elongated element consisting of the second elastomeric material having after vulcanization a modulus of elasticity E' under compression lower than that of the first elastomeric material previously deposited to form the radially inner layer 9 of the tread band 6.

Also in this second delivery position, the robotized arm 29 rotates the toroidal support 28 about its rotation axis X-X and carries out a relative displacement between the delivery member 34 and the toroidal support 28 also imparting to the latter a translational movement along a direction substantially parallel to the aforementioned rotation axis X-X.

Simultaneously with the rotation and translation movement of the toroidal support 28 the second delivery member 34 delivers the elongated element on the radially inner layer 9 of the tread band 6 so as to form the radially outer layer 10 of the tread band 6.

Also in this case, the delivery of the elongated element is preferably carried out by forming a plurality of coils axially arranged side-by-side and/or radially superposed.

At the end of this second deposition step, the tread band 6 of the green pneumatic tire being manufactured may be deemed to be complete for which reason the substantially toroidal support 28 is transported in a way known *per se* and not shown in the subsequent work stations of the plant.

This different preferred embodiment of the process according to the invention has in particular an advantageous and effective application when it is desired to use production techniques which allow to minimize or possibly even eliminate the production and the storage of the semifinished products, for example by adopting process solutions which allow to produce the individual components by directly applying the latter on the pneumatic tire being manufactured according to a predetermined sequence by means of a plurality of robotized stations.

Tests carried out by the Applicant have shown that that the pneumatic tires according to the invention not only fully achieve the objective of providing a pneumatic tire provided with a multi-layered tread band having improved handling characteristics and, more specifically, improved roadholding characteristics along a curve of the vehicle on which the pneumatic tire is mounted, but also achieve a number of advantages with respect to pneumatic tires of known type.

Among these it is possible to mention the following:
- possibility of adjusting as desired the number and pitch of the circumferential abutment elements along the transversal development of the tread band so as to have a structure capable of reacting both symmetrically and asymmetrically against the transversal stresses acting on the pneumatic tire;
- possibility of reducing the overall thickness of the tread band whilst still attaining improved characteristics of resistance to the transversal stresses acting on the pneumatic tire.

## Claims

1. Pneumatic tire (1) comprising a carcass structure (2) having at least one carcass ply (2a), at least one annular reinforcing structure (3) associated to said carcass structure (2), a tread band (6) made of an elastomeric material in a radially outer position with respect to said carcass structure (2), a belt structure (5) interposed between said carcass structure (2) and said tread band (6) and a pair of axially opposite sidewalls (7, 8) on said carcass structure (2), said tread band (6) comprising at least one radially inner layer (9) and a radially outer layer (10) apt to roll on the ground, wherein:
i) said tread band (6) is provided with a tread pattern,
ii) said at least one radially inner layer (9) has a modulus of elasticity (E') under compression greater than the modulus of elasticity (E') under compression of the radially outer layer (10); and
iii) said at least one radially inner layer (9) of the tread band (6) comprises a plurality of circumferential abutment elements (12) radially extending in said radially outer layer (10) and axially distributed along the transversal development of the tread band (6),
**characterized in that**
iv) the ratio between the height (h) and the width (1) of said abutment elements (12) is comprised between about 1:20 and about 4:1.

2. Pneumatic tire (1) according to claim 1, wherein the ratio between the modulus of elasticity (E') under compression at 70°C of said radially inner layer (9) and the modulus of elasticity (E') under compression at 70°C of the radially outer layer (10) is comprised between about 1.1 and about 3.

3. Pneumatic tire (1) according to claim 1 or 2, wherein said at least one radially inner layer (9) of the tread band (6) has a modulus of elasticity (E') under compression at 70°C comprised between about 2 and about 14 MPa.

4. Pneumatic tire (1) according to claim 1 or 2, wherein the radially outer layer (10) of the tread band (6) has a modulus of elasticity (E') under compression at 70°C comprised between about 2 and about 10 MPa.

5. Pneumatic tire (1) according to claim 1, wherein the ratio between the thickness of said at least one radially inner layer (9) and the overall thickness of the tread band (6) is comprised between about 0.5 and about 1.

6. Pneumatic tire (1) according to claim 1, wherein said abutment elements (12) are arranged side-by-side along the transversal development of the tread band (6).

7. Pneumatic tire (1) according to claim 1, wherein said abutment elements (12) are spaced apart along the transversal development of the tread band (6).

8. Pneumatic tire (1) according to claim 1 or 7, wherein said abutment elements (12) are axially distributed with a substantially constant pitch (p) along the transversal development of the tread band (6).

9. Pneumatic tire (1) according to claim 1 or 7, wherein said abutment elements (12) are axially distributed with a variable pitch (p) along the transversal development of the tread band (6).

10. Pneumatic tire (1) according to claim 1, wherein the ratio between the height (h) and the width (1) of said abutment elements (12) is comprised between about 1:5 and about 2:1.

11. Pneumatic tire (1) according to claim 1, wherein the ratio between the height (h) and the width (1) of said abutment elements (12) is substantially constant along the whole transversal development of the tread band (6).

12. Pneumatic tire (1) according to claim 1, wherein the ratio between the height (h) and the width (1) of the abutment elements (12) in at least a first portion (6a) of the tread band (6) is different from the ratio between the height (h) and the width (1) of the abutment elements (12) in at least a second portion (6b) of the tread band (6).

13. Pneumatic tire (1) according to claim 1, wherein said abutment elements (12) have a substantially polygonal cross section.

14. Pneumatic tire (1) according to claim 1, wherein said abutment elements (12) have a substantially curvilinear profile.

15. Process for manufacturing a pneumatic tire (1) according to any one of the preceding claims, comprising the steps of:
a) manufacturing a carcass structure (2) associated to an annular reinforcing structure (3);
b) making a belt structure (5);
c) arranging at least one first layer (9) of a tread band (6) and substantially consisting of a first elastomeric material in a radially outer position with respect to said belt structure (5), said first layer comprising a plurality of circumferential abutment elements (12) radially outwardly extending and axially distributed along the transversal development of the tread band (6);
d) arranging on said at least one first layer (9), at least one second layer (10) of the tread band (6) substantially consisting of a second elastomeric material having after vulcanization a modulus of elasticity under compression lower than the modulus of elasticity under compression of the first elastomeric material of said at least one first layer (9) of the tread band (6).

16. Process according to claim 15, wherein said belt structure (5) is made on a substantially cylindrical auxiliary drum (18') and wherein said steps c) and d) comprise the steps of:
e) positioning said auxiliary drum (18') at a first delivery member (22) of the first elastomeric material;
f) delivering by means of said first delivery member (22) at least one elongated element (24) made of said first elastomeric material on said belt structure (5) while carrying out a relative displacement between the first delivery member (22) and the auxiliary drum (18') so as to form said at least one first layer (9) of the tread band (6) comprising said plurality of circumferential abutment elements (12);
g) positioning the auxiliary drum (18') at a second delivery member (25) of the second elastomeric material;
h) delivering by means of said second delivery member (25) at least one elongated element (27) made of said second elastomeric material on said at least one first layer (9) of the tread band (6) while carrying out a relative displacement between the second delivery member (25) and the auxiliary drum (18') so as to form said at least one second layer (10) of the tread band (6).

17. Process according to claim 16, wherein said steps f) and h) of delivering the elongated elements (24, 27) of said first and second elastomeric materials are carried out by rotating said auxiliary drum (18') about its rotation axis (X-X).

18. Process according to claim 16 or 17, wherein the relative displacement between the delivery member (22, 25) and the auxiliary drum (18') is carried out by imparting to the auxiliary drum (18') a translational movement in a direction substantially parallel to its rotation axis (X-X).

19. Process according to claim 16, wherein said steps f) and h) of delivering the elongated elements of said first and second elastomeric materials are carried out by forming a plurality of coils axially arranged side-by-side and/or radially superposed to define said at least one first (9) and said second (10) layer of the tread band (6).

20. Process according to claim 15, wherein said belt structure (5) is made on a substantially toroidal support (18, 28) and wherein said steps c) and d) comprise the steps of:
e') positioning said substantially toroidal support (18, 28) at a first delivery member (22, 32) of the first elastomeric material;
f') delivering by means of said first delivery member (22, 32) at least one elongated element made of said first elastomeric material at a radially outer position with respect to said belt structure (5) while carrying out a relative displacement between the first delivery member (22, 32) and the toroidal support (18, 28) so as to form said at least one first layer (9) of the tread band (6) comprising said plurality of circumferential abutment elements (12);
g') positioning the substantially toroidal support (18, 28) at a second delivery member (25, 34) of the second elastomeric material;
h') delivering by means of said second delivery member (25, 34) at least one elongated element made of said second elastomeric material on the first layer (9) of the tread band (6) while carrying out a relative displacement between the second delivery member (25, 34) and the substantially toroidal support- (18, 28) so as to form said at least one second layer (10) of the tread band (6).

21. Process according to claim 20, wherein said steps f') and h') of delivering the elongated elements of said first and second elastomeric materials are carried out by rotating said substantially toroidal support (18, 28) about its rotation axis (X-X).

22. Process according to claim 20 or 21, wherein the relative displacement between the delivery member (32, 34) and the substantially toroidal support (18, 28) is carried out by imparting to the substantially toroidal support (18, 28) a translational movement in a direction substantially parallel to its rotation axis (X-X).

23. Process according to claim 20, wherein said steps f') and h') of delivering the elongated elements of said first and second elastomeric materials are carried out by forming a plurality of coils axially arranged side-by-side and/or radially superposed to define said at least one first (9) and said second (10) layer of the tread band (6).

24. Process according to claim 20, wherein said substantially toroidal support (28) is substantially rigid.

## Patentansprüche

1. Luftreifen (1)
- mit einem Karkassenaufbau (2), der wenigstens eine Karkassenlage (2a) hat,
- mit wenigstens einem ringförmigen Verstärkungsaufbau (3), der dem Karkassenaufbau (2) zugeordnet ist,
- mit einem Laufflächenband (6), das aus einem elastomeren Material in einer radial äußeren Position bezogen auf den Karkassenaufbau (2) besteht,
- mit einem Gurtaufbau (5), der zwischen dem Karkassenaufbau (2) und dem Laufflächenband (6) angeordnet ist, und
- mit einem Paar von axial gegenüberliegenden Seitenwänden (7, 8) an dem Karkassenaufbau (2),
- wobei das Laufflächenband (6) wenigstens eine radial innere Schicht (9) und eine radial äußere Schicht (10) für das Rollen auf dem Boden aufweist, und wobei
i) das Laufflächenband (6) mit einem Laufflächenmuster versehen ist,
ii) die wenigstens eine radial innere Schicht (9) einen Elastizitätsmodul (E') unter Kompression hat, der großer als der Elastizitätsmodul (E') unter Kompression der radial äußeren Schicht (10) ist und
iii) die wenigstens eine radial innere Schicht (9) des Laufflächenbandes (6) eine Vielzahl von Umfangs-Widerlagerelementen (12) aufweist, die sich radial in der radial äußeren Schicht (10) erstrecken und axial längs der Querabwicklung des Laufflächenbandes (6) verteilt sind,
**dadurch gekennzeichnet, dass**
iv) das Verhältnis zwischen der Höhe (h) und der Breite (1) der Widerlagerelemente (12) zwischen etwa 1:20 und etwa 4:1 liegt.

2. Luftreifen (1) nach Anspruch 1, bei welchem das Verhältnis zwischen dem Elastizitätsmodul (E') unter Kompression bei 70°C der radial inneren Schicht (9) und dem Elastizitätsmodul (E') unter Kompression bei 70°C der radial äußeren Schicht (10) zwischen etwa 1.1 und etwa 3 liegt.

3. Luftreifen (1) nach Anspruch 1 oder 2, bei welchem die wenigstens eine radial innere Schicht (9) des Laufflächenbandes (6) einen Elastizitätsmodul (E') unter Kompression bei 70°C zwischen etwa 2 und etwa 14 MPa hat.

4. Luftreifen (1) nach Anspruch 1 oder 2, bei welchem die radial äußere Schicht (10) des Laufflächenbandes (6) einen Elastizitätsmodul (E') unter Kompression bei 70°C zwischen etwa 2 und etwa 10 MPa hat.

5. Luftreifen (1) nach Anspruch 1, bei welchem das Verhältnis zwischen der Dicke der wenigstens einen radial inneren Schicht (9) und der Gesamtdicke des Laufflächenbandes (6) zwischen etwa 0,5 und etwa 1 liegt.

6. Luftreifen (1) nach Anspruch 1, bei welchem die Widerlagerelemente (12) längs der Querabwicklung des Laufflächenbandes (6) nebeneinander angeordnet sind.

7. Luftreifen (1) nach Anspruch 1, bei welchem die Widerlagerelemente, (12) längs der Querabwicklung des Laufflächenbandes (6) im Abstand angeordnet sind.

8. Luftreifen (1) nach Anspruch 1 oder 7, bei welchem die Widerlagerelemente (12) axial mit einer im Wesentlichen konstanten Teilung (p) längs der Querabwicklung des Laufflächenbandes (6) verteilt sind.

9. Luftreifen (1) nach Anspruch 1 oder 7, bei welchem die Widerlagerelemente (12) axial mit einer variablen Teilung (p) längs der Querabwicklung des Laufflächenbandes (6) verteilt sind.

10. Luftreifen (1) nach Anspruch 1, bei welchem das Verhältnis zwischen der Höhe (h) und der Breite (1) der Widerlagerelemente (12) zwischen etwa 1:5 und etwa 2:1 liegt.

11. Luftreifen (1) nach Anspruch 1, bei welchem das Verhältnis zwischen der Höhe (h) und der Breite (1) der Widerlagerelemente (12) längs der gesamten Querabwicklung des Laufflächenbandes (6) im Wesentlichen konstant ist.

12. Luftreifen (1) nach Anspruch 1, bei welchem das Verhältnis zwischen der Höhe (h) und der Breite (1) der Widerlagerelemente (12) in wenigstens einem ersten Abschnitt (6a) des Laufflächenbandes (6) sich von dem Verhältnis zwischen der Höhe (h) und der Breite (1) der Widerlagerelemente (12) in wenigstens einem zweiten Abschnitt (6b) des Laufflächenbandes (6) unterscheidet.

13. Luftreifen (1) nach Anspruch 1, bei welchem die Widerlagerelemente (12) einen im Wesentlichen polygonalen Querschnitt haben.

14. Luftreifen (1) nach Anspruch 1, bei welchem die Widerlagerelemente (12) ein im Wesentlichen gekrümmtes Profil haben.

15. Verfahren zur Herstellung eines Luftreifens (1) nach einem der vorhergehenden Ansprüche, welches die Schritte aufweist:
a) Herstellen eines Karkassenaufbaus (2), der einem ringförmigen Verstärkungsaufbau (3) zugeordnet wird,
b) Herstellen eines Gurtaufbaus (5),
c) Anordnen wenigstens einer ersten Schicht (9) eines Laufflächenbandes (6), das im Wesentlichen aus einem ersten elastomeren Material besteht, in einer radial äußeren Position bezüglich des Gurtaufbaus (5), wobei die erste Schicht eine Vielzahl von Umfangs-Widerlagerelementen (12) aufweist, die sich radial nach außen erstrecken und axial längs der Querabwicklung des Laufflächenbandes (6) verteilt sind, und
d) Anordnen auf der wenigstens einen ersten Schicht (9) wenigstens einer zweiten Schicht (10) des Laufflächenbandes (6),die im Wesentlichen aus einem zweiten elastomeren Material besteht, das nach der Vulkanisierung einen Elastizitätsmodul unter Kompression hat, der kleiner ist als der Elastizitätsmodul unter Kompression des ersten elastomeren Materials der wenigstens einen ersten Schicht (9) des Laufflächenbandes (6).

16. Verfahren nach Anspruch 15, bei welchem der Gurtaufbau (5) aus einer im Wesentlichen zylindrischen Zusatztrommel (18') hergestellt wird und bei welchem die Schritte c) und d) die Schritte aufweisen:
e) Positionieren der Zusatztrommel (18') an einem ersten Lieferelement (22) für das erste elastomere Material,
f) Liefern mit Hilfe des ersten Lieferelements (22) wenigstens eines langgestreckten Elements (24) aus dem ersten elastomeren Material auf den Gurtaufbau (5), während eine Relativverschiebung zwischen dem ersten Lieferelement (22) und der Zusatztrommel (18') so ausgeführt wird, dass die wenigstens eine erste Schicht (9) des Laufflächenbandes (6) gebildet wird, die die Vielzahl von Umfangs-Widerlagerelementen (12) aufweist,
g) Positionieren der Zusatztrommel (18') an einem zweiten Lieferelement (25) des zweiten elastomeren Materials und
h) Liefern mit Hilfe des zweiten Lieferelements (25) wenigstens eines langgestreckten Elements (27) aus dem zweiten elastomeren Material auf die wenigstens eine erste Schicht (9) des Laufflächenbandes (6), während eine Relativverschiebung zwischen dem zweiten Lieferelement (25) und der Zusatztrommel (18') ausgeführt wird, so dass die wenigstens eine zweite Schicht (10) des Laufflächenbandes (6) gebildet wird.

17. Verfahren nach Anspruch 16, bei welchem die Schritte f) und h) des Lieferns der langgestreckten Elemente (24, 27) aus dem ersten und zweiten elastomeren Material dadurch ausgeführt werden, dass die Zusatztrommel (18') um ihre Drehachse (X-X) gedreht wird.

18. Verfahren nach Anspruch 16 oder 17, bei welchem die Relativverschiebung zwischen dem Lieferelement (22, 25) und der Zusatztrommel (18') dadurch ausgeführt wird, dass auf die Zusatztrommel (18') eine Verschiebebewegung in eine Richtung ausgeübt wird, die im Wesentlichen parallel zu ihrer Drehachse (X-X) ist.

19. Verfahren nach Anspruch 16, bei welchem die Schritte f) und h) des Lieferns der langgestreckten Elemente aus dem ersten und zweiten elastomeren Material dadurch ausgeführt werden, dass eine Vielzahl von Windungen gebildet werden, die axial nebeneinander und/oder radial aufeinander angeordnet werden, um die wenigstens eine erste Schicht (9) und die wenigstens eine zweite Schicht (10) des Laufflächenbandes (6) zu bilden.

20. Verfahren nach Anspruch 15, bei welchem der Gurtaufbau (5) auf einem im Wesentlichen torusförmigen Träger (18, 28) ausgeführt wird, und die Schritte c) und d) die Schritte aufweisen:
e') Positionieren des im Wesentlichen torusförmigen Trägers (18, 28) an einem ersten Lieferelement (22, 32) für das erste elastomere Material,
f') Liefern mit Hilfe des ersten Lieferelements (22, 32) wenigstens eines langgestreckten Elements aus dem ersten elastomeren Material an einer radial äußeren Position bezogen auf den Gurtaufbau (5), während eine Relativverschiebung zwischen dem ersten Lieferelement (22, 32) und dem torusförmigen Träger (18, 28) ausgeführt wird, so dass die wenigstens eine erste Schicht (9) des Laufflächenbandes (6) gebildet wird, die die Vielzahl von Umfangs-Widerlagerelementen (12) aufweist,
g') Positionieren des im Wesentlichen torusförmigen Trägers (18, 28) an einem zweiten Lieferelement (25, 34) für das zweite elastomere Material und
h') Liefern mit Hilfe des zweiten Lieferelements (25, 34) wenigstens eines langgestreckten Elements aus dem zweiten elastomeren Material auf die erste Schicht (9) des Laufflächenbandes (6), während eine Relativverschiebung zwischen dem zweiten Lieferelement (25, 34) und dem im Wesentlichen torusförmigen Träger (18, 28) ausgeführt wird, so dass die wenigstens eine zweite Schicht (10) des Laufflächenbandes (6) gebildet wird.

21. Verfahren nach Anspruch 20, bei welchem die Schritte f') und h') des Lieferns der langgestreckten Elemente aus dem ersten und zweiten elastomeren Material durch Drehen des im Wesentlichen torusförmigen Trägers (18, 28) um seine Drehachse (X-X) ausgeführt werden.

22. Verfahren nach Anspruch 20 oder 21, bei welchem die Relatiwerschiebung zwischen dem Lieferelement (32, 34) und dem im Wesentlichen torusförmigen Träger (18, 28) dadurch ausgeführt wird, dass an den im Wesentlichen torusförmigen Träger (18, 28) eine Verschiebebewegung in eine Richtung angelegt wird, die im Wesentlichen parallel zu seiner Drehachse (X-X) ist.

23. Verfahren nach Anspruch 20, bei welchem die Schritte f') und h') des Lieferns der langgestreckten Elemente aus dem ersten und zweiten elastomeren Material ausgeführt werden, indem eine Vielzahl von Windungen ausgebildet werden, die axial nebeneinander und/oder radial aufeinander liegend angeordnet werden, um die wenigstens eine erste Schicht (9) und die wenigstens eine zweite Schicht (10) des Laufflächenbandes (6) zu bilden.

24. Verfahren nach Anspruch 20, bei welchem der im Wesentlichen torusförmige Träger (28) im Wesentlichen starr ist.

## Revendications

1. Pneumatique (1) comprenant une structure de carcasse (2) dotée d'au moins une couche de carcasse (2a), d'au moins une structure de renforcement annulaire (3) associée à ladite structure de carcasse (2), une bande de roulement (6), constituée d'un matériau élastomère, située à un emplacement radialement extérieur par rapport à ladite structure de carcasse (2), une structure de ceinture (5) interposée entre ladite structure de carcasse (2) et ladite bande de roulement (6) et une paire de flancs (7, 8) axialement opposés, situés sur ladite structure de carcasse (2), ladite bande de roulement (6) comprenant au moins une couche radialement intérieure (9) et une couche radialement extérieure (10) apte à rouler sur le sol, dans lequel pneumatique :
i) ladite bande de roulement (6) est munie d'un motif de bande de roulement,
ii) ladite au moins une couche radialement intérieure (9) a un module d'élasticité à la compression (E') supérieur au module d'élasticité à la compression (E') de la couche (10) radialement extérieure; et
iii) ladite au moins une couche radialement intérieure (9) de la bande de roulement (6) comprend une pluralité d'éléments de butée circonférentiels (12) s'étendant radialement dans ladite couche radialement extérieure (10) et répartis axialement sur le développement transversal de la bande de roulement (6),
**caractérisé en ce que**
iv) le rapport entre la hauteur (h) et la largeur (1) desdits éléments de butée (12) est compris entre environ 1/20 et environ 4/1.

2. Pneumatique (1) selon la revendication 1, dans lequel le rapport entre le module d'élasticité à la compression (E'), à 70°C, de ladite couche radialement intérieure (9) et le module d'élasticité à la compression (E'), à 70°C, de la couche (10) radialement extérieure est compris entre environ 1,1 et 3.

3. Pneumatique (1) selon la revendication 1 ou 2, dans lequel ladite au moins une couche radialement intérieure (9) de la bande de roulement (6) a un module d'élasticité à la compression (E'), à 70°C, compris entre environ 2 MPa et environ 14 MPa.

4. Pneumatique (1) selon la revendication 1 ou 2, dans lequel la couche radialement extérieure (10) de la bande de roulement (6) a un module d'élasticité à la compression (E'), à 70°C, compris entre environ 2 MPa et environ 10 MPa.

5. Pneumatique (1) selon la revendication 1, dans lequel le rapport entre l'épaisseur de ladite au moins une couche radialement intérieure (9) et l'épaisseur globale de la bande de roulement (6) est compris entre environ 0,5 et 1.

6. Pneumatique (1) selon la revendication 1, dans lequel lesdits éléments de butée (12) sont agencés côte à côte sur le développement transversal de la bande de roulement (6).

7. Pneumatique (1) selon la revendication 1, dans lequel lesdits éléments de butée (12) sont espacés les uns des autres sur le développement transversal de la bande de roulement (6).

8. Pneumatique (1) selon la revendication 1 ou 7, dans lequel lesdits éléments de butée (12) sont répartis axialement avec un pas (p) substantiellement constant sur le développement transversal de la bande de roulement (6).

9. Pneumatique (1) selon la revendication 1 ou 7, dans lequel lesdits éléments de butée (12) sont répartis axialement avec un pas (p) variable sur le développement transversal de la bande de roulement (6).

10. Pneumatique (1) selon la revendication 1, dans lequel le rapport entre la hauteur (h) et la largeur (1) desdits éléments de butée (12) est compris entre environ 1/5 et environ 2/1.

11. Pneumatique (1) selon la revendication 1, dans lequel le rapport entre la hauteur (h) et la largeur (1) desdits éléments de butée (12) est substantiellement constant sur l'ensemble du développement transversal de la bande de roulement (6).

12. Pneumatique (1) selon la revendication 1, dans lequel le rapport entre la hauteur (h) et la largeur (1) des éléments de butée (12) dans au moins une première partie (6a) de la bande de roulement (6) est différent du rapport entre la hauteur (h) et la largeur (1) des éléments de butée (12) dans au moins une deuxième partie (6b) de la bande de roulement (6).

13. Pneumatique (1) selon la revendication 1, dans lequel lesdits éléments de butée (12) ont une section transversale substantiellement polygonale.

14. Pneumatique (1) selon la revendication 1, dans lequel lesdits éléments de butée (12) ont un profil substantiellement curviligne.

15. Procédé de fabrication d'un pneumatique (1) selon l'une quelconque des revendications qui précèdent, comprenant les étapes consistant à :
a) fabriquer une structure de carcasse (2) associée à une structure de renforcement annulaire (3) ;
b) réaliser une structure de ceinture (5) ;
c) disposer au moins une première couche (9) d'une bande de roulement (6) substantiellement constituée d'un premier matériau élastomère à un emplacement radialement extérieur par rapport à ladite structure de carcasse (5), ladite première couche comprenant une pluralité d'éléments de butée circonférentiels (12) s'étendant radialement vers l'extérieur et répartis axialement sur le développement transversal de la bande de roulement (6) ;
d) agencer sur ladite au moins une première couche (9), au moins une deuxième couche (10) de la bande de roulement (6) substantiellement constituée d'un deuxième matériau élastomère ayant, après vulcanisation, un module d'élasticité à la compression inférieur au module d'élasticité à la compression du premier matériau élastomère de ladite au moins une première couche (9) de la bande de roulement (6).

16. Procédé selon la revendication 15, dans lequel ladite structure de ceinture (5) est substantiellement réalisée sur un tambour auxiliaire cylindrique (18') et dans lequel lesdites étapes c) et d) comprennent les opérations consistant à :
e) positionner ledit tambour auxiliaire (18') au niveau d'un premier élément de distribution (22) du premier matériau élastomère ;
f) délivrer au moyen dudit premier élément de distribution (22) au moins un élément oblong (24), constitué dudit premier matériau élastomère, sur ladite structure de ceinture (5) tout en exécutant un déplacement relatif entre le premier élément de distribution (22) et le tambour auxiliaire (18') de manière à former ladite au moins une première couche (9) de la bande de roulement (6) comprenant ladite pluralité d'éléments de butée circonférentiels (12) ;
g) positionner le tambour auxiliaire (18') au niveau d'un deuxième élément de distribution (25) du deuxième matériau élastomère ;
h) délivrer au moyen dudit élément de distribution (25) au moins un élément oblong (27), constitué dudit deuxième matériau élastomère, sur ladite au moins une première couche (9) de la bande de roulement (6) tout en exécutant un déplacement relatif entre le deuxième élément de distribution (25) et le tambour auxiliaire (18') de manière à former ladite au moins une deuxième couche (10) de la bande de roulement (6).

17. Procédé selon la revendication 16, dans lequel lesdites opérations f) et h) de distribution des éléments oblongs (24, 27) desdits premier et deuxième matériaux élastomères sont exécutés en faisant tourner ledit tambour auxiliaire (18') sur son axe de rotation (X-X).

18. Procédé selon la revendication 16 ou 17, dans lequel le déplacement relatif entre l'élément de distribution (22, 25) et le tambour auxiliaire (18') est exécuté en impartissant au tambour auxiliaire (18') un mouvement de translation dans une direction substantiellement parallèle à son axe de rotation (X-X).

19. Processus selon la revendication 16, dans lequel lesdites opérations f) et h) de délivrance d'éléments oblongs des premier et deuxième matériaux élastomères sont exécutées en réalisant une pluralité de spires disposées axialement côte à côte et/ou radialement superposées pour définir ladite au moins une première couche (9) et ladite deuxième couche (10) de la bande de roulement (6).

20. Procédé selon la revendication 15, dans lequel ladite structure de ceinture (5) est réalisée sur un support substantiellement toroïdal (18, 28) et dans lequel lesdites étapes c) et d) comprennent les opérations consistant à :
e') positionner ledit support substantiellement toroïdal (18, 28) au niveau d'un premier élément de distribution (22, 32) du premier matériau élastomère ;
f') délivrer au moyen dudit premier élément de distribution (22, 32) au moins un élément oblong constitué dudit premier matériau élastomère à un emplacement radialement extérieur par rapport à ladite structure de ceinture (5) tout en exécutant un déplacement relatif entre le premier élément de distribution (22, 32) et le support toroïdal (18, 28) de manière à former ladite au moins première couche (9) de la bande de roulement (6) comprenant ladite pluralité d'éléments de butée circonférentiels (12) ;
g') positionner le support substantiellement toroïdal (18, 28) au niveau d'un deuxième élément de distribution (25, 34) du deuxième matériau élastomère ;
h') délivrer au moyen dudit deuxième élément de distribution (25, 34) au moins un élément oblong en ledit deuxième élément élastomère sur la première couche (9) de la bande de roulement (6) tout en exécutant un déplacement relatif entre le deuxième élément de distribution (25, 34) et le support substantiellement toroïdal (18, 28) de manière à former ladite au moins une deuxième couche (10) de la bande de roulement (6),

21. Processus selon la revendication 20, dans lequel lesdites opérations f) et h') de distribution d'éléments oblongs des premier et deuxième matériaux élastomères sont exécutées en faisant tourner ledit support substantiellement toroïdal (18, 28) sur son axe de rotation (X-X).

22. Procédé selon la revendication 20 ou 21, dans lequel le déplacement relatif entre l'élément de distribution (32, 34) et le support substantiellement toroïdal (18, 28) est exécuté en impartissant au support substantiellement toroïdal (18, 28) un mouvement de translation dans une direction substantiellement parallèle à son axe de rotation (X-X).

23. Procédé selon la revendication 20, dans lequel lesdites opérations f) et h') de distribution d'éléments oblongs en lesdites premier et deuxième matériaux élastomères sont exécutées en réalisant une pluralité de spires disposées axialement côte à côte et/ou radialement superposées pour définir ladite au moins une première couche (9) et ladite deuxième couche (10) de la bande de roulement (6).

24. Procédé selon la revendication 20, dans lequel ledit support substantiellement toroïdal (28) est substantiellement rigide.
